# EUROPÄISCHE PATENTSCHRIFT

(11) **EP 0 988 889 B1**
(45) Veröffentlichungstag und Bekanntmachung des Hinweises auf die Patenterteilung: **19.01.2005**
(21) Anmeldenummer: 98118114.2
(22) Anmeldetag: 24.09.1998
(51) Int. Cl.: B01J 20/28, B01J 31/06

(54) **Polymergebundenes körniges ad-, ab-, chemisorptiv oder katalytisch wirkendes Material**
Polymer bound adsorptive, absorptive, chemisorptive or catalytic granular material
Matériau granulaire ayant des propriétés d'adsorption, d'absorption, de chemisorption ou catalytique lié à l'aide de polymère

(43) Veröffentlichungstag der Anmeldung: 29.03.2000
(73) Patentinhaber: AUERGESELLSCHAFT GMBH, 12059 Berlin (DE); Fraunhofer-Gesellschaft zur Förderung der angewandten Forschung e.V., 80686 München (DE)
(72) Erfinder: Nastke, Rudolf, Dr. rer. nat. Dipl.-Chem., 14558 Bergholz-Rehbrücke (DE); Rafler, Gerald, Dr. habil. Dipl.-Chem., 14473 Potsdam (DE); Remde, Helmut, Dipl.-Phys., 14480 Potsdam (DE); Krügerke, Thomas, Dr. Dipl.-Chem., 12099 Berlin (DE); Stadermann, Gabriele, 12059 Berlin (DE); Kohls, Jannett, Dipl.-Chem., 10781 Berlin (DE); Kurth, Martin, Dipl.-Ing., 12359 Berlin (DE); Lubkoll, Dieter, Dr. Dipl.-Chem., 12207 Berlin (DE)
(74) Vertreter: Wablat, Wolfgang, Dr.Dr.

(56) Entgegenhaltungen:
- EP-A- 0 159 696
- EP-A- 0 345 381
- DE-A- 2 227 533
- DE-A- 19 515 670
- DE-A- 19 714 350
- US-A- 3 715 869
- US-A- 4 081 401
- US-A- 4 220 553
- US-A- 5 389 325

## Beschreibung

Die Erfindung betrifft ein polymergebundenes körniges ab-, ad-, chemisorptiv oder katalytisch wirkendendes Material sowie ein Verfahren zur Herstellung von Formkörpern aus diesem Material.

Aus dem Stand der Technik sind geformte Filterkörper, deren Adsorptionswirkung auf Aktivkohle basiert, bekannnt. Als Matrix für die Aktivkohle sind folgende Stoffe zu benennen:
- offenporige Schaumstoffe
- Phenoplaste
- Polyurethane
- Gips
- Papiertrager
- Kohlenstoffgerüst.

Grundprinzip derartiger Erfindungen ist die Einlagerung aktivierter Kohlen in den Polymerkörper bzw. die Bildung einer Kohlenstoffmatrix innerhalb der Aktivkohle selbst (DE A1 41 40 455).

Die Lösung gemäß DE C2 3719 419 verwendet als Trägermaterial offenporigen Schaumstoff.

In der DE A1 39 25 693 wird vorgeschlagen, aus der Kohle eine dreidimensionale Matrix mittels einer Haftschicht, die nicht näher erläutert ist, aufzubauen.

Eine ähnliche Lösung wird in der DE A1 38135 64 vorgeschlagen.

In der DE A1 41 40 455 wird ein Verfahren zur Herstellung von Komposit-Adsorbentien, die sich durch hohe Abriebfestigkeit auszeichnen und aus hochporösen anorganischen Füllstoffen und einer chemisch widerstandsfähigen und porösen Matrix bestehen, beschrieben. Dies wird durch Carbonisierung des wasserlöslichen Bindemittels, z.B. vorzugsweise Pechsäure, erreicht.

In der DE U1 91 15 610 werden ebenfalls Schaumstoffe, vorzugsweise gut geschäumte Polyurethane, in die die Aktivkohlen eingelagert werden, beschrieben.

Nach der EP A1 04 92 081 wird ein Gemisch aus Cellulose, Polyvinylalkohol und Aktivkohle zu einem Hexagonkörper mit wählbarer Größe der Hohlkörper geformt. Das Produkt zeigt eine gute Eignung zur Adsorption von Luftverunreinigungen, wobei jedoch die Kapazitäten nicht befriedigen.

Die DE A1 34 43 900 und die DE C3 24 00 827 beinhalten kohleimprägnierte Gewebe und Vliese. Bei diesen Lösungen werden Spezialpolymere auf Polyurethanbasis. z.B. Polyurethanfluorid und Polytetrafluorethylenurethan, verwendet.

Das rumänische Patent RO 10 40 21 beinhaltet ebenfalls einen porösen Polyurethan-Stützkörper, in dessen Poren granulierte Aktivkohle eingeschlossen ist. Dabei wird das Granulat durch Imprägnieren mit einer Lösung aus 15 bis 20 % Aktivkohlepulver und 15 % Kleber hergestellt, woraus ersichtlich wird, daß auch hier die Kapazitäten nicht befriedigen können.

Interessante Verfahren zur Herstellung von Aktivkohleformkörpern für den Gasmaskeneinsatz werden in den Schriften US 50 78 132, EP 03 09 277 und WO 94 03 270 beansprucht. Bei diesen Lösungen handelt es sich um ein selbsttragendes poröses Gas-Filter-Material, das aus einem gegossenen Körper von charakteristisch definierten Teilchen des Adsorbermaterials und des thermoplastischen Binders besteht. Die Einzelteilchen sind dabei zu einem geformten Filterköper mit offenen Zwischenräumen verschmolzen. Charakteristisch ist, daß die Größe der Binderpartikel kleiner ist als 20 % der Durchschnittsgröße der Adsorberpartikel. Nachteilig ist, daß nur beim Einsatz von thermoplastischem Polyurethan befriedigend gute Ergebnisse hinsichtlich Luftwiderstand und Kapazität erzielt werden und relativ hohe (ca. 20 Masse-%) Polymeranteile notwendig sind.

Nachteile aller bisher geschilderten Lösungen des Standes der Technik sind darin zu sehen, daß beim Mischen von Polymer- und Adsorberpartikel stets bei jedem weiteren Handling Inhomogenitäten in der Verteilung der Phasen auftreten, die in starkem Maße die Qualität, insbesondere den Luftwiderstand und die Kapazität der Produkte negativ beeinflussen.
Die Verarbeitung thermoplastischer klebriger Polyurethane ist technologisch mit Schwierigkeiten behaftet und deren Einsatz ist auch durch einen enormen Kostenfaktor geprägt. Während der Schmelze des Polymeren, der einen Anteil von in der Regel 20 Masse-% am Produkt ausmacht, kommt es zu großflächigen Bedeckungen der Oberfläche des Adsorbers, was zu starken Kapazitätsverlusten und zur Erhöhung des Durchgangswiderstandes führt. Außerdem führt die gute Sprayung des thermoplastischen Polyurethans auf dem aktiven Produkt ebenfalls zu einer nicht unerheblichen Bedeckung der aktiven Oberfläche und damit zu Kapazitätsverlusten.

Aus der DE A1 195 14 887 ist eine Lösung zur Herstellung eines adsorbierenden biegsamen Filterflächengebildes auf Basis eines flexiblen Flächengebildes bekannt, bei dem zur Fixierung der Adsorberteilchen, u.a. Polyolefine angegeben, aber nicht näher ausgeführt sind. Die Lösung ist aufgrund des textilen Trägermateriales nicht geeignet zur Herstellung beliebig geformter Formkörper und auch nicht vergleichbar mit der erfindungsgemäßen Lösung, die ohne Trägermaterialien auskommt. Die Lösung gemäß DE A1 42 38 142 beinhaltet poröse Körper mit adsorbierenden Eigenschaften, wobei als Bindemittel Polyolefine genannt, aber nicht näher ausgeführt sind. Die Adsorberteilchen und Bindemittelteilchen haben vergleichbare Größen, so daß diese Lösung mit der erfindungsgemäßen Lösung aufgrund andersartiger Entmischungsprobleme nicht vergleichbar ist.

Aufgabe der vorliegenden Erfindung ist die Entwicklung eines polymergebundenen körnigen ad-, ab-, chemisorptiv oder katalytisch wirkenden Materials, das in der Lage ist, bei erhöhten Temperaturen einen, die spezifische Oberfläche des Wirkmaterials nicht reduzierenden, offenporigen und sorptiv wirkenden Schaumkörper zu bilden, wobei eine Haftvermittlerwirkung nur während der Mischungs- und Verarbeitungsphase zum Tragen kommen soll, sowie ein Verfahren zur Herstellung von Formkörpern aus diesem Material.

Ziel der Erfindung war die Entwicklung eines ad-, ab-, chemisorptiv oder katalytisch wirkendem Material und eines technologischen Prozesses zur Herstellung von Formkörpern daraus, wodurch die Nachteile des Standes der Technik überwunden und bei mindestens gleichwertiger mechanischer Stabilität eine höhere Kapazität, eine leichtere Verarbeitung und eine Minimierung der Kosten erreicht werden.

Überraschenderweise wurde die Aufgabe dadurch gelöst, daß ein thermoplastisches Polymer mit geringer Oberflächenspraytung auf dem aktiven Material und ein geeignetes Bindemittel gefunden wurde, wodurch eine möglichst gute homogene Verteilung des körnigen thermoplastischen Polymeren im aktiven Material gewährleistet wird, die Haftung der Polymerteilchen am körnigen aktiven Material auch über längere Verarbeitungszeiträume aufrechterhalten und dabei die aktive Oberfläche des Wirkmaterials möglich wenig benetzt wird, wobei das Bindemittel während des Härtungsprozesses in einen chemisch inerten Zustand übergeht und die Kapazität des Aktivmaterials möglichst wenig einschränkt.

Als auf aktiven Materialien wenig spreitendes thermoplastisches Polymer wurde erfindungsgemäß Polyethylen niederer Dichte und mit niedrigem Schmelzpunkt ermittelt. Das Polyethylen gestattet eine feste mechanische Bindung zwischen den Körnern des aktiven Materials, so daß auch am fertigen Formkörper eine mechanische Bearbeitung wie Sägen, Fräsen, Bohren u.a. möglich wird.
Dabei wird die aktive Oberfläche des Wirkmaterials nur minimal bedeckt (< 2 % Verlust der spezifischen Oberfläche). Bereits 5 Masse-% des Polymeren bezogen auf die Masse des aktiven Materials bewirken eine für bestimmte Einsatzzwecke ausreichende mechanische Stabilität der Formkörper.
Das Problem einer effizienten homogenen Verteilung des thermoplastischen Polymeren im aktiven Material über längere Verarbeitungszeiträume wurde durch den Einsatz eines Fixierhilfemittels auf der Basis modifizierter Aminoharzoligokondensate gelöst. Besondere Vorteile hinsichtlich der Benetzung des thermoplastischen Polymeren mit dem Aminoplast, der Haftwirkung zum Aktivmaterial bei minimaler Benetzung des Aktivmaterials und einem inerten Verhalten nach dem thermischen Prozeß bietet ein partiell mit Methanol verethertes und mit Triethanolamin modifiziertes und neutralisiertes Melaminharzpräkondensat. Während der thermischen Behandlung vernetzt das Aminoharzpräkondensat zu einem Polymethylenmelamin unter Ausbildung eines offen-porigen schaumähnlichen Polymeren mit guten sorptiven Eigenschaften aufgrund seiner hohen spezifischen Oberfläche (bis 300 m²/g).

Diese Sorptionseigen-schaften erstrecken sich auf Gase, Ionen und andere chemische Spezies wie Öle, Lösemittel, u.a.
Damit trägt das eingesetzte Fixierhilfs- bzw. Bindemittel zur Schaffung sorptionsfähiger Oberflächen bei. Wichtig beim Einsatz ist die Verwendung von Haftvermittlersystemen, die keine organischen Lösemittel enthalten, d.h., daß wasserverdünnbare Aminoharzvorkondensate eingesetzt werden.
Verwendet man organische Lösemittel enthaltende Systeme, beobachtet man eine augenblickliche Adsorption der Lösemittelkomponente am Aktivmaterial, die Haftvermittler- bzw. Fixierkomponenten werden trocken und es treten wiederum bei jedem weiteren Handling besagte Entmischungserscheinungen auf. Wasserverdünnbare Systeme hingegen bleiben über mindestens 120 Minuten im klebrigen, fließfähigen Zustand und damit über diese Zeiträume gut verarbeitbar.

Beispielhaft wurden zur Durchführung von Versuchen Niederdruckpolyethylen in partikulärer Form (z.B. M_{w} 35.000, M_{N} 7.700) mit einem Schmelzpunkt zwischen 85 und 140 °C und ein Malaminharzvorkondensat in einem geeigneten Behälter mit Rührtechnik vermischt. Nach gründlicher Durchmischung und Benetzung des Polyethylens mit dem Aminoharzvorkondensat gibt man beispielsweise eine körnige Aktivkohle hinzu und durchmischt weiterhin intensiv bis zur Erreichung augenscheinlicher Homogenität. Die Mischung wird anschließend in ein beliebiges in der Regel formgebendes Werkeug überführt und bei niedrigen Drücken und Temperaturen um etwa 100°C verpreßt. Während dieses Vorgangs kommt es zur Verschäumung, Vernetzung und Aushärtung der Aminoharzkomponente, gleichzeitig schmilzt der Polyethylenkörper unter Ausbildung von Polymerbrücken zwischen den einzelnen Körnchen der Aktivkohle. Nach kurzer Abkühlphase und Entformung ist der mechanisch bearbeitbare Formkörper generiert.

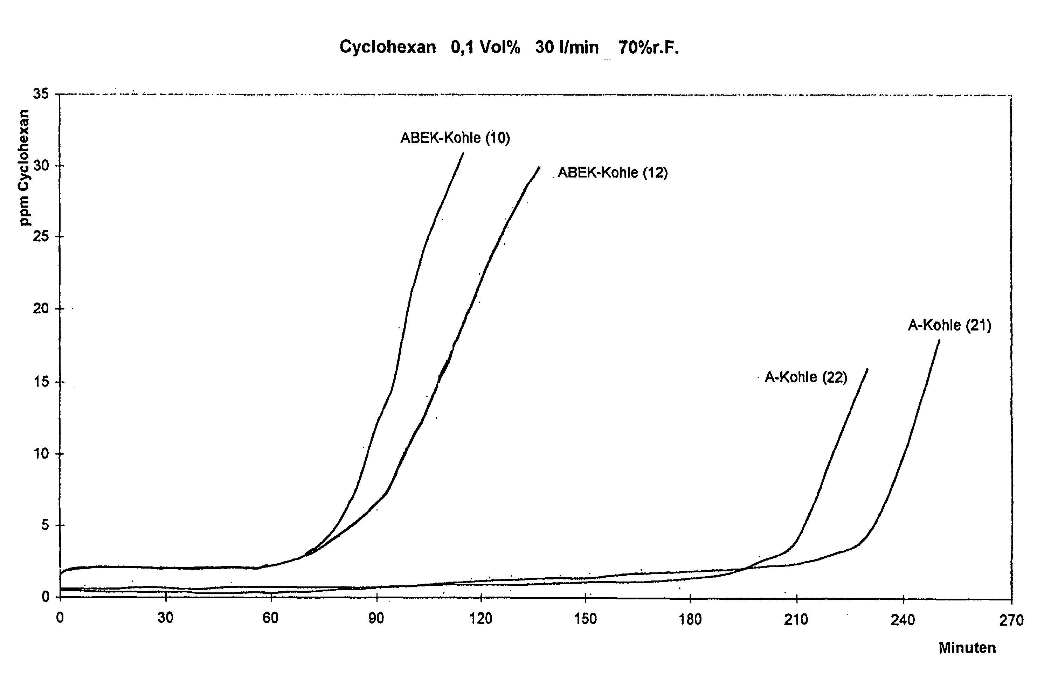

Nach dem Verfahren hergestellte Aktivkohleprüfkörper mit einem Gewicht von 150 bis 160 g Brutto, einer Höhe von ca. 40 mm und einem Durchmesser von 105 mm, zeigen das in der Abbildung dargestellte Sorptionsverhalten.

Die folgenden Beispiele sollen die Erfindung erläutern, jedoch nicht einschränken.

### Beispiel 1:

### Herstellung eines Melaminharzpräkondensates

279 ml Formalin (30 Masse-%ig, wäßrig) werden mit verdünnter Natronlauge auf pH9 eingestellt und auf eine Temperatur von 80 °C erwärmt. Danach werden 63 g Melamin (s-Triaminotriazin) dazugegeben. Während der Reaktion steigt die Temperatur auf 94 ° C an. Nach der vollständigen Auflösung des Melamins wird die Lösung auf 60 ° C abgekühlt, dabei kann es zu einer Trübung durch ausfallende Methylolverbindungen kommen. Bei 60 °C gibt man 270 ml Methanol und 1,6 ml einer mit Wasser im Verhältnis 1:1 verdünnten Salzsäure hinzu und beläßt diese am Rückfluß ca. 20 bis 30 Minuten bei dieser Temperatur. Anschließend gibt man 6,3 g Triethanolamin hinzu und destilliert bei 60 °C unter Vakuum (ca. 15 Torr) ein Methanol-Wasser-Gemisch azeotrop ab, bis sich ein Feststoffgehalt von ca. 45 % einstellt und gibt dann 1 3,5 g Harnstoff zur Stabilisierung hinzu.
Das nach dem Abkühlen angefallene Vorkondensat ist sehr gut lagerfähig und besitzt die geforderten Eigenschaften für den angeführten Einsatzzweck.

### Beispiel 2:

### Herstellung der Reaktionsmischung

In einem geeigneten Gefäß mit Rühr- oder Schüttelvorrichtung werden beispielsweise 7,5 g Polyethylen (feinkörnig, Smp. 90 - 95 °C) und 5 g des Aminoharzvorkondensates nach Beispiel 1 intensiv vermischt, anschließend gibt man 150 g Aktivkohle hinzu und mischt weiterhin intensiv bis zur Erzielung einer augensheinlichen Homogenität und guter Fließfähigkeit. Das Produkt wird in ein geeignetes Werkzeug überführt, auf 110 °C erwärmt und bei einem Druck von 0,0125 bis 0,25 bar/cm² verpreßt. Man erhält zum Beispiel Formkörper mit einer Höhe zwischen 25 und 50 mm in Abhängigkeit vom angewandten Preßdruck bei einem Durchmesser von 105 mm.

### Beispiel 3:

Die Durchführung erfolgt wie in Beispiel 2, es werden jedoch 15 g Polyethylen eingesetzt.

### Beispiel 4:

Die Durchführung erfolgt wie im Beispiel 2, es werden jedoch 15g Aminoharzvorkondensat angewendet.

## Patentansprüche

1. Polymergebundenes körniges ad-, ab-, chemisorptiv oder katalytisch wirkendes Material, erhältlich durch Vermischen eines feinkörnigen ad-, ab-, chemisorptiv oder katalytisch wirkenden Materials mit einem feinteiligen, schmelzbaren Polyethylen unter Zusatz eines Haftvermittlers auf der Basis modifizierter Aminoharzoligokondensate.

2. Polymergebundenes körniges ad-, ab-, chemisorptiv oder katalytisch wirkendes Material nach Anspruch 1, **dadurch gekennzeichnet, dass** das feinteilige Polyethylen eine niedrige Dichte aufweist.

3. Polymergebundenes körniges ad-, ab-, chemisorptiv oder katalytisch wirkendes Material nach Anspruch 1 und 2, **dadurch gekennzeichnet, daß** das feinteilige Polyethylen einen Schmelzbereich von 85 bis 130 ° C, vorzugsweise 90 bis 115 ° C aufweist.

4. Polymergebundenes körniges ad-, ab-, chemisorptiv oder katalytisch wirkendes Material nach Anspruch 1 bis 3, **dadurch gekennzeichnet, daß** das feinteilige Polyethylen eine Körnung von 1/10 bis 1/2. vorzugsweise 1/8 bis 1/4, der Körnung des körnigen ad-, ab-, chemisorptiv oder katalytisch wirkenden Materials hat.

5. Polymergebundenes körniges ad-, ab-, chemisorptiv oder katalytisch wirkendes Material nach Anspruch 1 bis 4, **dadurch gekennzeichnet, daß** der Anteil an Polyethylen bezüglich dem körnigen ad-, ab-, chemisorptiv oder katalytisch wirkenden Material 5 bis 30 Masse-%, vorzugsweise 7 bis 20 Masse-%, beträgt.

6. Polymergebundenes körniges ad-, ab-, chemisorptiv oder katalytisch wirkendes Material nach Anspruch 1 bis 5, **dadurch gekennzeichnet, daß** der Haftvermittler ein Arminoharzvorkondensat ist.

7. Polymergebundenes körniges ad-, ab-, chemisorptiv oder katalytisch wirkendes Material nach Anspruch 1 bis 6, **dadurch gekennzeichnet, daß** der Haftvermittler ein mit Triäthanolamin und Methanol modifiziertes wäßriges Aminoharzvorkondensat ist.

8. Polymergebundenes körniges ad-, ab-, chemisorptiv oder katalytisch wirkendes Material nach Anspruch 1 bis 7, **dadurch gekennzeichnet, daß** der Anteil an Haftvermittler 10 bis 80 Masse-%, vorzugsweise 30 bis 50 Masse-%, bezogen auf die eingesetzte Polyethylenmasse, beträgt.

9. Verfahren zur Herstellung von Formkörpern aus einem polymergebundenen körnigen ad-, ab-, chemisorptiv oder katalytisch wirkenden Material nach Anspruch 1 bis 8 **dadurch gekennzeichnet, daß**
- das schmelzbare Polyethylen in einem geeigneten Mischgefäß mit dem Oligokondensat intensiv benetzt wird.
- das feinkörnige ad-, ab-, chemisorptiv oder katalytisch wirkende Material zugegeben wird,
- die Mischung intensiv gemischt wird,
- die Mischung über ein geeignetes Transportsystem einer Verarbeitungsmaschine zugeführt wird und
- die Mischung bei Temperaturen von 90 bis 180 °C, vorzugsweise 100 bis 140 °C und Drücken von 0,0125 bis 0,25 bar/cm², vorzugsweise 0,0225 bis 0,0625 bar/cm², in der Form zu einem Formkörper verpreßt wird und,
- der Formkörper in der Form gekühlt und anschließend entformt wird.

## Claims

1. Polymer-bonded granular adsorptive, absorptive, chemisorptive or catalytically active material, obtainable by mixing a fine-grained adsorptive, absorptive, chemisorptive or catalytically active material with a finely particulate, meltable polyethylene with the addition of a binding agent having a basis of modified amino resin oligocondensates.

2. Polymer-bonded granular adsorptive, absorptive, chemisorptive or catalytically active material according to claim 1, **characterized in that** the finely particulate polyethylene has a low density.

3. Polymer-bonded granular adsorptive, absorptive, chemisorptive or catalytically active material according to claims 1 and 2, **characterized in that** the finely particulate polyethylene has a melting range of 85 to 130°C, preferably 90 to 115°C.

4. Polymer-bonded granular adsorptive, absorptive, chemisorptive or catalytically active material according to claims 1 to 3, **characterized in that** the finely particulate polyethylene has a particle size of from 1/10 to 1/2, preferably from 1/8 to 1/4 of the particle size of the granular adsorptive, absorptive, chemisorptive or catalytically active material.

5. Polymer-bonded granular adsorptive, absorptive, chemisorptive or catalytically active material according to claims 1 to 4, **characterized in that** the portion of polyethylene is 5 to 30 %, preferably 7 to 20 % of the mass of the granular adsorptive, absorptive, chemisorptive or catalytically active material.

6. Polymer-bonded granular adsorptive, absorptive, chemisorptive or catalytically active material according to claims 1 to 5, **characterized in that** the binding agent is an amino resin precondensate.

7. Polymer-bonded granular adsorptive, absorptive, chemisorptive or catalytically active material according to claims 1 to 6, **characterized in that** the binding agent is an aqueous amino resin precondensate modified with triethanolamine and methanol.

8. Polymer-bonded granular adsorptive, absorptive, chemisorptive or catalytically active material according to claims 1 to 7, **characterized in that** the portion of the binding agent is 10 to 80 %, preferably 30 to 50 % of the mass of the polyethylene used.

9. Process for producing molded bodies of a polymer-bonded granular adsorptive, absorptive, chemisorptive or catalytically active material according to claims 1 to 8, **characterized in that**
- the meltable polyethylene is intensively wetted with the oligocondensate in a suitable mixing container,
- the fine-grained adsorptive, absorptive, chemisorptive or catalytically active material is added,
- the mixture undergoes intensive mixing,
- the mixture is conveyed via a suitable transport system to a processing machine,
- the mixture is formed into a body in the mold at temperatures of 90 to 180°C, preferably 100 to 140°C and at a pressure of 0,0125 to 0,25 bar/cm², preferably 0,0225 to 0,0625 bar/cm², and
- the molded body is cooled in the mold and then released from the mold.

## Revendications

1. Matériau granulaire lié à un polymère agissant de manière adsorbante, absorbante, chimisorbante ou catalytique, pouvant être obtenu par mélange d'un matériau à grain fin agissant de manière adsorbante, absorbante, chimisorbante ou catalytique avec un polyéthylène fusible à partie fine avec ajout d'un liant à base d'oligo-condensats de résine amino.

2. Matériau granulaire lié à un polymère agissant de manière adsorbante, absorbante, chimisorbante ou catalytique selon la revendication 1, **caractérisé en ce que** le polyéthylène à partie fine présente une faible densité.

3. Matériau granulaire lié à un polymère agissant de manière adsorbante, absorbante, chimisorbante ou catalytique selon les revendications 1 et 2, **caractérisé en ce que** le polyéthylène à partie fine présente un domaine de fusion de 85 à 130°C, de préférence 90 à 115°C.

4. Matériau granulaire lié à un polymère agissant de manière adsorbante, absorbante, chimisorbante ou catalytique selon les revendications 1 à 3, **caractérisé en ce que** le polyéthylène à partie fine a une granulométrie de 1/10 à 1/2, de préférence 1/8 à 1/4, de la granulométrie du matériau granulaire agissant de manière adsorbante, absorbante, chimisorbante ou catalytique.

5. Matériau granulaire lié à un polymère agissant de manière adsorbante, absorbante, chimisorbante ou catalytique selon les revendications 1 à 4, **caractérisé en ce que** la proportion de polyéthylène par rapport au matériau granulaire agissant de manière adsorbante, absorbante, chimisorbante ou catalytique est 5 à 30 % en masse, de préférence 7 à 20 % en masse.

6. Matériau granulaire lié à un polymère agissant de manière adsorbante, absorbante, chimisorbante ou catalytique selon les revendications 1 à 5, **caractérisé en ce que** le liant est un précondensat de résine amino.

7. Matériau granulaire lié à un polymère agissant de manière adsorbante, absorbante, chimisorbante ou catalytique selon les revendications 1 à 6, **caractérisé en ce que** le liant est un précondensat de résine amino aqueux modifié avec de la triéthanolamine et du méthanol.

8. Matériau granulaire lié à un polymère agissant de manière adsorbante, absorbante, chimisorbante ou catalytique selon les revendications 1 à 7, **caractérisé en ce que** la proportion de liant est 10 à 80 % en masse, de préférence 30 à 50 % en masse, par rapport à la masse de polyéthylène employée.

9. Procédé de production de pièces moulées à partir d'un matériau granulaire lié à un polymère agissant de manière adsorbante, absorbante, chimisorbante ou catalytique selon les revendication 1 à 8, **caractérisé en ce que**
- le polyéthylène fusible est mouillé intensivement avec l'oligo-condensat dans un récipient de mélange approprié,
- le matériau à grain fin agissant de manière adsorbante, absorbante, chimisorbante ou catalytique est ajouté,
- le mélange est agité de manière intensive,
- le mélange est amené par un système de transport approprié à une machine de mise en oeuvre et
- le mélange est injecté dans le moule à des températures de 90 à 180°C, de préférence 100 à 140°C et à des pressions de 0,0125 à 0,25 bar/cm², de préférence 0,0225 à 0,0625 bar/cm², pour obtenir une pièce moulée et,
- la pièce moulée est refroidie dans le moule et est finalement démoulée.
